# EUROPEAN PATENT SPECIFICATION

(11) **EP 3 456 501 B1**
(45) Date of publication and mention of the grant of the patent: **22.12.2021**
(21) Application number: 17795805.5
(22) Date of filing: 06.03.2017
(51) Int. Cl.: B29C 45/14, B29C 45/26, B29L 31/36, B29K 59/00, B29K 67/00, B29K 21/00

(54) **INSERT MOLDED BODY AND ELECTRICAL CONNECTOR FOR FUEL PUMP**
EINSATZFORMKÖRPER UND ELEKTRISCHER STECKVERBINDER FÜR EINE KRAFTSTOFFPUMPE
CORPS MOULÉ PAR INSERTION ET CONNECTEUR ÉLECTRIQUE POUR POMPE À CARBURANT

(30) Priority: 09.05.2016 JP 2016093806
(43) Date of publication of application: 20.03.2019
(73) Proprietor: Polyplastics Co., Ltd., Tokyo 108-8280 (JP)
(72) Inventor: KONDO, Hidemi, Fuji-shi Shizuoka 416-8533 (JP); YORIFUJI, Daisuke, Fuji-shi Shizuoka 416-8533 (JP)
(74) Representative: Zumstein, Angela
(86) International application number: PCT/JP2017/008724
(87) International publication number: WO 2017/195444

(56) References cited:
- WO-A1-2009/151099
- WO-A1-2009/151099
- WO-A1-2011/071061
- JP-A- H07 124 996
- JP-A- H09 143 341
- JP-A- 2007 169 656
- JP-B2- 3 467 471
- JP-B2- 5 748 491

## Description

### TECHNICAL FIELD

The present invention relates to an insert molded body and an electrical connection connector for fuel pumps.

### BACKGROUND ART

Conventionally, an insert molded body including an insert member made of a metal, an alloy, or the like and a thermoplastic resin member is commonly used. An insert molded body, for example, is used for an electronic device, a sensor, and a connector in a vehicle as well as an interface connection part and a power supply terminal part of an electronic device.

However, it is generally difficult to join an insert member with a resin member. In particularly, when a metal is subjected to insert molding with a thermoplastic resin, almost no adhesiveness between the metal and the resin can be obtained.

Accordingly, Patent 1 discloses that in order to improve integration of an insert member with a thermoplastic resin member, a heat activatable adhesive is applied on a surface of an insert member; the heat activatable adhesive is heated; and plastic is then injection-molded around a metal part to which the adhesive has been applied.

Further, Patent Document 2 discloses that a surface of an insert member is treated with an alkaline or acidic solution, and then further treated with a silane coupling agent; and an insert member is then placed in a mold for injection molding; and injection is then performed to effect integration with a thermoplastic resin member. The insert molded body described in Patent Document 2 may be suitable for a pressure gauge which is used for automobiles and the like. Even when the thermoplastic resin member, for example a connector body, as a mating partner of the insert member is attached or detached, a terminal pin does not become loosen. Further, good adhesiveness obtained can prevent inflow and outflow of a liquid.

Moreover, Patent Document 3 discloses that grooving is performed on a surface of an insert member in a direction intersecting with a direction along which airtightness of a joining interface is required; and the insert member is joined with a molten thermoplastic resin by injection molding and the like to obtain a metal composite molded body having a sealed structure. Further, in Patent Document 3, general-purpose resins, engineering plastics, super engineering plastics, and the like are exemplified as the thermoplastic resin, and various thermoplastic resins, including polyphenylene sulfide, polyacetal, and the like are specifically disclosed. Further, Example of Patent Document 3 discloses that no air leakage is observed when a metal composite joined body in which an aluminum alloy is used as a metal member, and a super engineering plastic, polyphenylene sulfide (PPS) having a melting point of 280°C, is used as a thermoplastic resin is set at an opening of an airtight container body, and compressed air at 0.5 MPa is injected for 30 seconds.

Further, Patent Document 4 discloses that a thermoplastic elastomer resin composition (Y) presented between a non-thermoplastic resin member (Z) and a thermoplastic resin (X) includes 66 to 98.98 mass% of a polyester block copolymer (A) with a melting point of less than 210°C, having a hard segment (a1) composed of a crystalline aromatic polyester unit and a soft segment (a2) composed of an aliphatic polyether unit and/or an aliphatic polyester unit, 1 to 30 mass% of a polyvinyl alcohol resin (B), 0.01 to 5.0 mass% of a silane coupling agent (C), and 0.01 to 5.0 mass% of an antioxidant (D). Patent Document 4 widely exemplifies publicly known resins which can be used as the thermoplastic resin (X), including a polyacetal resin, and also discloses that, among these, the thermoplastic resin (X) preferably includes as a main component at least one resin selected from the group consisting of polyphenylene sulfide resins, polyethylene terephthalate resins, polybutylene terephthalate resins, polycarbonate resins, liquid crystal polyester resins, and polyimide resins.

Moreover, Example of Patent Document 4 discloses that no air leakage is observed from the resulting metal composite thermoplastic resin molded body even when the resulting metal composite thermoplastic resin molded body is subjected to 50 cycles of cooling/heating treatments under temperature conditions of -40°C for 1 hour and 110°C for 1 hour, and then fixed to a leakage measuring jig; and a tube through which compressed air is to be allowed to flow is then connected with a socket; and an assembly in which the metal composite thermoplastic resin molded body is fixed to the leakage measuring jig is placed into a water bath containing water; and compressed air at 0.4 MPa is allowed to flow into the jig for 5 minutes. The resins used in the above Example are a polyphenylene sulfide resin, a polybutylene terephthalate resin, and a polycarbonate resin.

WO 2009/151099 discloses an integrally injection-molded aluminum/resin article including: an aluminum shape which is made of an aluminum alloy and has recesses derived from irregularities formed in the surface; and a molded resin which is integrally formed on the surface of the aluminum shape by the injection molding of a thermoplastic resin and has fitting portions formed in the recesses by the entering of the thermoplastic resin followed by solidification during the injection molding, the aluminum shape and the molded resin being locked with each other through the recesses and the fitting portions.
Patent Document 1: Japanese Unexamined Patent Application, Publication No. 2011-526223
Patent Document 2: Japanese Unexamined Patent Application, Publication No. 2003-103562
Patent Document 3: Japanese Unexamined Patent Application, Publication No. 2011-240685
Patent Document 4: Japanese Unexamined Patent Application, Publication No. 2016-047601

### DISCLOSURE OF THE INVENTION

### Problems to be Solved by the Invention

Meanwhile, an insert molded body is known to be used as an electrical connection connector for supplying electric power to a fuel pump attached to a fuel tank of a vehicle. Such an electrical connection connector is installed so as to penetrate a lid plate of a fuel tank, and is configured such that one end of a terminal metal fitting is exposed to the outside of the tank and the other end is exposed to the inside, respectively.

In this context, evaporation of a fuel in the fuel tank will increase the pressure inside the fuel tank. As the pressure increases, the evaporated fuel may start to leak from a gap between the lid plate (a thermoplastic resin member) and the terminal metal fitting (an insert member) of the electrical connection connector. In order to prevent this, very high airtightness performance is required for an electrical connection connector for fuel pumps.

Further, fuel resistance is required for an electrical connection connector for fuel pumps. As a resin member of an electrical connection connector part for fuel pumps, used is polyacetal (may also be referred to as polyoxymethylene, and abbreviated as "POM") in view of its excellent fuel resistance. Use of a polyacetal resin member can reduce decrease of stiffness due to swelling and the like with a fuel oil. Furthermore, use of a polyacetal resin enables products to be manufactured at low cost with low raw resin cost and shortened molding cycles. This is also economically advantageous.

However, Patent Document 1 does not include any disclosure about the degree of airtightness of an insert molded body, leaving a room for improving airtightness performance.

In addition, a process of manufacturing an insert molded body requires steps of applying a heat activatable adhesive on a surface of an insert member; and heating the heat activatable adhesive. Further, quality control of an uncured heat activatable adhesive is required because the uncured heat activatable adhesive may deteriorate upon exposure to air. These can be factors of increased manufacturing cost. Therefore, a simplified process is desired.

Further, an insert molded body described in Patent Document 2 includes a sealant between a terminal pin and a thermoplastic resin member to prevent leakage of an enclosed liquid from between the terminal pin (which corresponds to an insert member) and the thermoplastic resin member even when the pressure of the enclosed liquid becomes high as the pressure applied from a pressure-introducing pore increases. The sealant may be omitted when the pressure applied from the pressure-introducing pore is low. However, it is unlikely to be omitted when high airtightness performance is required which is sufficient for an electrical connection connector for fuel pumps. Therefore, there still exists a room for improving airtightness performance.

In addition, the process of manufacturing an insert molded body requires steps of applying a sealant composition on a surface of an insert member; and heating the sealant composition. Further, quality control of an uncured sealant composition is also required because the uncured sealant composition may deteriorate upon exposure to air. These can be factors of increased manufacturing cost. Therefore, a simplified process is desired.

Further, Patent Document 3 merely exemplifies various thermoplastic resins which can be used as the thermoplastic resin, including polyphenylene sulfide, polyacetal, and the like. Example of Patent Document 3 discloses that no air leakage is observed even when a metal composite joined body in which an aluminum alloy is used as a metal member, and polyphenylene sulfide is used as a thermoplastic resin is set at an opening of an airtight container body, and compressed air at 0.5 MPa is injected for 30 seconds. However, replacement of polyphenylene sulfide with polyacetal for the thermoplastic resin does not necessarily guarantee comparable airtightness performance. Therefore, there still exists a room for improving airtightness performance when a polyacetal resin is used.

Moreover, for the approach described in Patent Document 4, manufacture of a metal composite thermoplastic resin molded body requires steps of arranging the thermoplastic elastomer resin composition (Y) on a surface of the non-thermoplastic resin member (Z) and heating the composition (Y), and also requires quality control of an uncured composition (Y) because the uncured composition (Y) may deteriorate upon exposure to air. These can be factors of increased manufacturing cost. Therefore, a simplified process is desired.

Further, Patent Document 4 merely exemplifies various thermoplastic resins which can be used as the thermoplastic resin, including polyphenylene sulfide, polyacetal, and the like. Example of Patent Document 4 discloses that certain airtightness performance can be obtained when a polyphenylene sulfide resin, a polybutylene terephthalate resin, and a polycarbonate resin are used as the thermoplastic resin. However, replacement of these thermoplastic resins with polyacetal does not necessarily guarantee comparable airtightness performance. Therefore, there still exists a room for improving airtightness performance when a polyacetal resin is used.

The present invention is made in order to solve the aforementioned problems. An object of the prevent invention is to provide simply and at low cost, an insert molded body including a polyacetal resin member as a base substance and having very high airtightness performance.

### Means for Solving the Problems

After conducting extensive studies to achieve the aforementioned object, the present inventors found that an insert molded body having very high airtightness performance can be provided simply and at low cost when a polyacetal resin composition for a polyacetal resin member has a specific composition. Then the present invention has been completed. Specifically, the present invention can provide the followings.
(1) An embodiment of the present invention provides an insert molded body including a metallic insert member and a polyacetal resin member, the metallic insert member being directly joined with the polyacetal resin member, the polyacetal resin member being a molded body of a polyacetal resin composition including 100 parts by mass of a polyacetal resin (A) and 30 parts by mass or more and 150 parts by mass or less of a thermoplastic polyester elastomer (B).
(2) Further, an embodiment of the present invention provides the insert molded body according to (1), in which the metallic insert member is a metal member, and a 10-point averaged roughness Rz as measured in accordance with JIS B 0601 is 10 µm or more at a contact surface of the metal member being in contact with the resin member.
(3) Moreover, the present specification describes the insert molded body according to (1) or (2), in which no air-bubble leakage is observed from an interface between the metallic insert member and the resin member when the insert molded body is set on an airtightness testing machine, and the entire surface of the resin member of the insert molded body is immersed into distilled water, and a pressure of 500 kPa is applied to a back side of the insert molded body for one minute.
(4) Moreover, an embodiment of the present invention provides an electrical connection connector for fuel pumps including the insert molded body according to any one of (1) to (3).

### Effects of the Invention

An embodiment of the prevent invention can provide simply and at low cost, an insert molded body including a polyacetal resin member as a base substance and having very high airtightness performance.

### BRIEF DESCRIPTION OF THE DRAWINGS

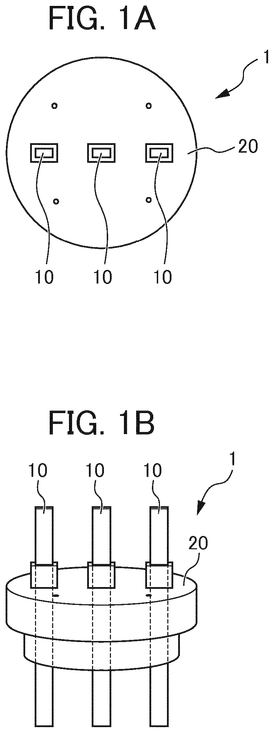

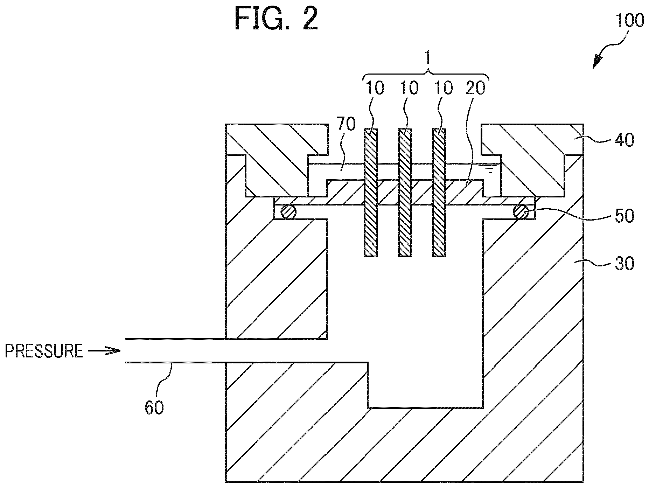

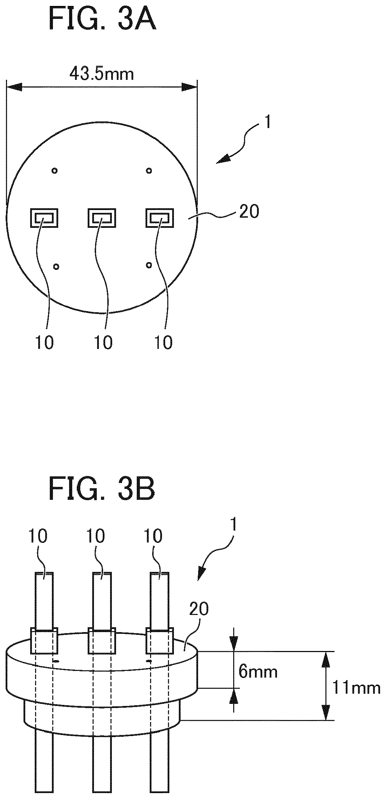

Fig. 1 shows a schematic configuration of an insert molded body according to the present embodiment.
(A) is a top view of the insert molded body, and (B) is a perspective view. Fig. 2 shows a cross-sectional view of a schematic configuration of an airtightness testing machine being attached with an insert molded body. Fig. 3 shows a schematic configuration of an insert molded body according to the present Example.
(A) is a top view of the insert molded body, and (B) is a perspective view.

### PREFERRED MODE FOR CARRYING OUT THE INVENTION

Below, the specific embodiments of the present invention will be described in detail, but the present invention shall not be limited in any way to the following embodiments. Appropriate alternations may be added to carry out the present invention within its object.

### <Insert molded body 1>

Fig. 1 shows a schematic configuration of an insert molded body according to the present embodiment. More specifically, Fig. 1(A) is a top view of an insert molded body 1, and Fig. 1(B) is a perspective view. The insert molded body 1 includes a metallic insert member 10 and a polyacetal resin member 20. First, the metallic insert member 10 and the polyacetal resin member (hereinafter, may also be referred to as a resin member) 20 will be each described. It is noted that Fig. 1 merely shows an example where the present invention is applied to an electrical connection connector for fuel pumps and, needless to say, the present invention shall not be limited to this configuration.

### [Metallic insert member 10]

The metallic insert member 10 may be made of any of a metallic material, which is a material different form the polyacetal resin member 20. However, in order that properties of materials are best used, and disadvantages of the resin member 20 are compensated, materials which is not deformed or melted when brought into contact with a resin during molding may be preferably used. Metallic materials mainly include, for example, metals such as aluminum, magnesium, copper, iron, zinc, nickel, titanium, tin, cobalt, zirconium, beryllium, and alloys thereof (aluminum alloys, stainless steel, brass, and the like). Further, a metal thin film may be formed on a surface of the metallic insert member 10. Metal thin films include, for example, those formed by plating treatment (wet plating treatment, dry plating treatment, and the like). Further, the metallic insert member 10 may be a simple metal material, or the like, as well as a composite body including a plurality of metal, inorganic, and organic materials. The metallic insert member 10 is made of a metal when it is applied as a terminal of an electrical connection connector for fuel pumps. According to an embodiment of the present invention, even when the metallic insert member is made of a metal, the insert molded body 1 has very high airtightness performance as described below.

Further, the shape of the metallic insert member 10 may appropriately be selected depending on the intended use of the insert molded body 1. Examples of the shape to be formed include a rod-like shape, a pin-like shape, a screw-like shape, and the like. There is no particular limitation for a method of forming the metallic insert member 10, but publicly known methods of machining by cutting work and the like with machine tools and mold-casting such as dies casting, injection molding, and press punching may be used to pre-form the metallic insert member 10 into a desired shape.

Further, since the metallic insert member 10 is a metal member made of a metal, a surface to be brought into contact with the resin member 20 is preferably subjected to surface roughening treatment. Specifically, the 10-point averaged roughness Rz of a surface of the metallic insert member 10 subjected to surface roughening treatment is preferably 10 µm or more, more preferably 30 µm or more as measured in accordance with JIS B 0601. Surface roughening treatment of a surface of the metallic insert member 10 to be brought into contact with the resin member 20 can improve adhesion force between the metallic insert member 10 and the resin member 20 to provide the insert molded body 1 having very high airtightness performance. It is noted that the surface of the metallic insert member 10 subjected to surface roughening treatment may be all or a portion of a surface to be brought into contact with the resin member 20.

The above surface roughening treatment may be chemical treatment, physical treatment, or a combination of both. Chemical treatment can generate chemical adhesion effects by virtue of covalent bonding, hydrogen bonding, intermolecular force, or the like between the metallic insert member 10 and the resin member 20. This tends to improve airtightness at the interface between the metallic insert member 10 and the resin member 20.

Examples of chemical treatment include dry processing such as corona discharge; triazine treatment (see Japanese Unexamined Patent Application, Publication No. 2000-218935); chemical etching (Japanese Unexamined Patent Application, Publication No. 2001-225352); and the like. Further, when the metallic insert member 10 is made of aluminum, hot-water treatment (Japanese Unexamined Patent Application, Publication No. H-142110) may also be used. Examples of hot-water treatment include immersion into water at 100°C for 3 minutes or more and 5 minutes or less. A plurality of chemical treatments may be used in combination.

Examples of physical treatment include sandblasting, laser beam machining, electro-discharge machining, cutting work such as milling cutter, and the like. In view of machining efficiency and the degree of freedom in design, laser beam machining is preferred. Laser beam oscillators used for laser beam machining include YAG (Nd:YAG) laser, YVO₄ (Nd:YVO₄) laser, CO₂ laser, excimer laser, argon laser, and the like. Among these, YVO₄ laser at a wavelength of 1.064 µm, YAG laser at a wavelength of 1.064 µm, CO₂ laser with a wavelength of 10.6 µm, and the like are preferably used when a metal material is subjected to machining.

### [Polyacetal resin member 20]

The polyacetal resin member 20 is a molded body of a polyacetal resin composition. The polyacetal resin composition contains at least a polyacetal resin (A) and a thermoplastic polyester elastomer (B).

### [Polyacetal resin (A)]

The polyacetal resin (A) for use in an embodiment of the present invention refers to a polymer compound having an oxymethylene group (-CH₂O-) as a main constituent unit. Examples of the polyacetal resin (A) include a polyacetal polymer consisting substantially of an oxymethylene group as a repeating unit; a polyacetal copolymer including a small amount of another constituent unit in addition to an oxymethylene group; and the like. Although any of these can be used, a polyacetal copolymer is preferably used as a base resin in view of improving fuel-resistance of the resin member 20.

When the component (A) is a polyacetal copolymer, the polyacetal copolymer is preferably prepared by copolymerizing a comonomer component in an amount of 0.5 mass% or more and 30 mass% or less, and particularly preferably prepared by copolymerizing a comonomer component in an amount of 0.5 mass% or more and 10 mass% or less. A polyacetal copolymer prepared by copolymerizing a comonomer component can maintain excellent fuel resistance as well as excellent thermal stability, mechanical strength, and the like. Further, a polyacetal copolymer may have a linear molecular structure as well as a branched molecular structure, or a cross-linked molecular structure.

When manufacturing such a polyacetal copolymer, a cyclic oligomer of formaldehyde exemplified by trioxane may be used as the main monomer. Further, a compound selected from cyclic ethers and/or cyclic formals having at least one carbon-carbon bond may be used as a comonomer component. Examples of such a comonomer include ethylene oxide, 1,3-dioxolane, diethylene glycol formal, 1,4-butanediol formal, 1,3-dioxane, propylene oxide, and the like.

There is no particular limitation for the degree of polymerization and the like for the component (A) as described above, particularly for a polyacetal copolymer, and the degree of polymerization and the like may be adjusted depending on the intended uses and molding means. However, in view of achieving both fuel resistance and moldability, the melt index (MI) as measured at a temperature of 190°C and a load of 2.16 kg is preferably 1 g/10 minutes or more and 100 g/10 minutes or less, and more preferably 5 g/10 minutes or more and 30 g/10 minutes or less.

It is noted that conventionally, general-purpose resins such as polyethylene (PE), polypropylene (PP), polyvinyl chloride (PVC), polyvinylidene chloride, polystyrene, polyvinyl acetate, acrylic resin, ABS resin, and AS resin are used for a molded body of a resin material. Further, engineering plastic materials are used such as polyamide (nylon and the like), polyacetal, polycarbonate, modified polyphenylene ether, polyethylene terephthalate (PET), polybutylene terephthalate (PBT), glassfiber reinforced polyethylene terephthalate, and cyclic polyolefin. Super engineering plastic materials are used such as polyphenylene sulfide (PPS), polytetrafluoroethylene (PTFE), polysulfone, polyether sulfone, amorphous polyarylate, liquid crystal polymer, polyether ether ketone (PEEK), thermoplastic polyimide, and polyamide-imide. Thermosetting resins are used such as phenol resin, epoxy resin, melamine resin, urea resin, unsaturated polyester resin, alkyd resin, polyurethane, and thermosetting polyimide.

The polyacetal resin member 20 containing the component (A) has excellent chemical resistance as compared with the resin materials described above, and shows less decrease of stiffness due to swelling and the like with a fuel oil is small. Therefore, it is suitable for a vehicle part which is brought into contact with a fuel oil. For example, it may be used as a large-sized part such as a fuel delivery unit exemplified by a fuel pump module which is brought into direct contact with a fuel oil.

### [(B) Thermoplastic polyester elastomer]

The thermoplastic polyester elastomer (B) for use in an embodiment of the present invention is generally a block copolymer having a structure in which a hard block (a hard segment including aromatic polyester and the like) is combined with a soft block (a soft segment). The thermoplastic polyester elastomer (B) may be classified into a polyester-polyester type elastomer and a polyether-polyester type elastomer according to the types of the soft block. Any of them may be suitably used in an embodiment of the present invention, and may be used in appropriate combination of two or more.

Below, the hard segment and the soft segment will be described.

### (Hard segment)

The hard segment includes hard polyester such as aromatic polyester. Hard polyester can be obtained by condensation polymerization of dicarboxylic acid and diol, condensation polymerization of oxycarboxylic acid, and the like. Hard polyester is preferably aromatic polyester which can be obtained by condensation polymerization of a monomer including at least one type of aromatic monomer.

Suitable aromatic monomers for use in manufacture of aromatic polyester include aromatic dicarboxylic acid such as terephthalic acid, isophthalic acid, phthalic acid, 2,6-naphthalenedicarboxylic acid, and 4,4'-dicarboxydiphenyl ether; aromatic diol such as hydroquinone, resorcin, 4,4'-dihydroxybiphenyl, and bisphenol A; aromatic hydroxycarboxylic acid such as 4-hydroxybenzoic acid, 3-hydroxybenzoic acid, 6-hydroxy-2-naphthoic acid, and 4-carboxy-4'-hydroxybiphenyl; alkyl, alkoxy, or halogen substituted substances of these aromatic monomers; and esterifiable derivatives such as C1-6 alkyl esters, acid halides, and acetylated compounds of these aromatic monomers. These aromatic monomers may be used in appropriate combination of two or more.

Aromatic polyester may be prepared by copolymerizing another comonomer component other than the above aromatic monomers. Specific examples of the comonomer component include alkylene glycol such as ethylene glycol, propylene glycol, trimethylene glycol, 1,3-butylene glycol, hexamethylene glycol, neopentyl glycol, and 1,3-octanediol; polyoxyalkylene glycol such as diethylene glycol, triethylene glycol, and dipropylene glycol; alicyclic diol such as cyclohexanedimethanol and hydrogenated bisphenol A; alkanedicarboxylic acid such as succinic acid, adipic acid, azelaic acid, and sebacic acid; cycloalkanedicarboxylic acid such as cyclohexanedicarboxylic acid; aliphatic hydroxycarboxylic acid, such as glycolic acid and hydroxycaproic acid; and esterifiable derivatives such as C1-6 alkyl esters, acid halides, and acetylated compounds of these comonomer components. These comonomer components may be used in appropriate combination of two or more.

There is no particular limitation for the aromatic polyester to be included in a hard segment as long as it can be obtained with an aromatic monomer. Suitable examples of the aromatic polyester to be included in a hard segment include aromatic polyester which can be obtained by condensation polymerization of one or more monomers selected from the group consisting of aromatic dicarboxylic acid, aromatic diol, and aromatic hydroxycarboxylic acid; aromatic polyester which can be obtained by condensation polymerization of aromatic dicarboxylic acid and nonaromatic diol (aliphatic diol, alicyclic diol, and the like); aromatic polyester which can be obtained by condensation polymerization of nonaromatic dicarboxylic acid (alkanedicarboxylic acid, cycloalkanedicarboxylic acid, and the like) and aromatic diol; and aromatic polyester which can be obtained by copolymerizing aromatic hydroxycarboxylic acid with aliphatic hydroxycarboxylic acid.

The aromatic polyester to be included in a hard segment may be crystalline aromatic polyester or liquid crystal polyester, and crystalline aromatic polyester is preferably used. Suitable crystalline aromatic polyesters to be included in a hard segment include, for example, C2-4 alkylene arylate such as polyethylene terephthalate, polybutylene terephthalate, polyethylene naphthalate, and polybutylene naphthalate; and modified C2-4 alkylene arylate modified with 1 mol% or more and 30 mol% or less (more preferably 3 mol% or more and 25 mol% or less, and in particular preferably 5 mol% or more and 20 mol% or less) of a comonomer component relative to the total amount of the monomer. For the thermoplastic polyester elastomer (B), a polyester elastomer having polybutylene terephthalate segment as a hard segment may be preferably used because the resulting polyacetal resin composition can easily be molded and processed, and the resulting molded body can have high mechanical properties.

### (Soft segment)

Among these substances which can be used as the thermoplastic polyester elastomer (B), a polyester-polyester type elastomer includes the aforementioned hard segment and a soft segment including a soft polyester. Soft polyester to be included in a soft segment can be obtained by condensation polymerization of dicarboxylic acid and diol, condensation polymerization of hydroxycarboxylic acid and lactone, and the like. Soft polyester having a structure which is softer than hard polyester to be included in a hard segment may be used, and can usually be obtained by condensation polymerization of a monomer including at least one aliphatic monomer component. Aliphatic monomer components which is used as a monomer of soft polyester include alkylene glycol such as ethylene glycol, propylene glycol, trimethylene glycol, 1,3-butylene glycol, hexamethylene glycol, neopentyl glycol, and 1,3-octanediol; polyoxyalkylene glycol such as polyoxyethylene glycol, polyoxypropylene glycol, and polyoxytetramethylene glycol; alkanedicarboxylic acid such as succinic acid, adipic acid, azelaic acid, and sebacic acid; aliphatic hydroxycarboxylic acid, such as glycolic acid and hydroxycaproic acid; lactone such as propiolactone, butyrolactone, valerolactone, and caprolactone (ε-caprolactone and the like); and esterifiable derivatives such as C1-6 alkyl esters, acid halides, and acetylated compounds of these aliphatic monomer components. These aliphatic monomer components may be used in appropriate combination of two or more. These aliphatic monomer components can be used in combination with a nonaromatic monomer such as alicyclic diol and cycloalkanedicarboxylic acid, if desired. Soft polyester to be included in a soft segment of a polyester-polyester type elastomer is preferably aliphatic polyester which can be obtained with alkanedicarboxylic acid and aliphatic diol, or polylactone which can be obtained by ring-opening polymerization of lactone.
Among these substances which can be used as the thermoplastic polyester elastomer (B), a polyether-polyester type elastomer includes the aforementioned hard segment and a soft segment having a polyether unit.
Polyether units to be included in a soft segment of a polyether-polyester type elastomer include an aliphatic polyether unit including a polyoxy C2-6 alkylene glycol unit such as polyoxyethylene glycol, polyoxypropylene glycol, and polyoxytetramethylene glycol; and a polyester unit having an aliphatic polyether unit including a polyoxy C2-6 alkylene glycol unit; and the like.

As the aliphatic polyether unit, preferred is a unit derived from polyoxy C2-4 alkylene glycol such as polyethylene glycol, polyoxypropylene glycol, and polyoxy tetramethylene glycol.

As the polyester unit having an aliphatic polyether unit, preferred is a polyester unit which can be obtained with polyoxyalkylene glycol; and nonaromatic dicarboxylic acid such as alkanedicarboxylic acid and cycloalkanedicarboxylic acid or an esterifiable derivative of nonaromatic dicarboxylic acid.

### [Preparation of thermoplastic polyester elastomer (B)]

The thermoplastic polyester elastomer (B) described above can be prepared by copolymerizing a component which can generate the aforementioned hard segment with a component which can generate the soft segment in accordance with a publicly known method.

Examples of a polyester-polyester type elastomer which can suitably be used in the present embodiment include block copolymers having a hard segment including aromatic crystalline polyester, such as a polybutylene terephthalate resin and a copolymer of a polybutylene terephthalate resin and a copolymer component (ethylene glycol, isophthalic acid, and the like), or liquid crystal polyester; and a soft segment including aliphatic polyester which can be obtained by copolymerizing C2-6 alkylene glycol with C6-12 alkanedicarboxylic acid.

Examples of a polyether-polyester type elastomer which can suitably be used in the present embodiment include block copolymers having a hard segment including aromatic crystalline polyester, such as a polybutylene terephthalate resin and a copolymer of a polybutylene terephthalate resin and a copolymer component (ethylene glycol, isophthalic acid, and the like), or liquid crystal polyester; and a soft segment including polyester which can be obtained by condensation polymerization of polyoxy C2-4 alkylene glycol such as polyoxytetramethylene glycol and dicarboxylic acid.

The content of the thermoplastic polyester elastomer (B) is 30 parts by mass or more and 150 parts by mass or less relative to 100 parts by mass of the polyacetal resin (A), preferably 40 parts by mass or more and 130 parts by mass or less, and more preferably 50 parts by mass or more and 100 parts by mass or less. When the content of the thermoplastic polyester elastomer (B) is less than 30 parts by mass, the adhesion force between the metallic insert member 10 and the polyacetal resin member 20 tends to be weak, resulting in insufficient airtightness of the insert molded body 1. When the content of the thermoplastic polyester elastomer (B) is more than 150 parts by mass, the flexural modulus of the polyacetal resin member 20 tends to be insufficient, resulting in decrease of stiffness of the insert molded body 1.

### [Other components]

The polyacetal resin composition according to an embodiment of the present invention may contain another known component, if desired. For example, any one or two or more of hindered phenol-based compounds; nitrogen-containing compounds; and hydroxides, inorganic salts and carboxylate salts of alkali or alkaline earth metals can be exemplified as a stabilizer.

Further, one or two or more of common additives which can be added to a thermoplastic resin can be added, if desired, as long as the purposes and effects of the present invention are not interfered. They include, for example, coloring agents such as dyes and pigments, lubricants, parting agents, antistatic agents, surfactants, or organic polymer materials, inorganic or organic fibrous, powdery, or plate-like filler.

### [Direct joining]

The metallic insert member 10 is directly joined with the resin member 20. The term "directly joined" as used herein refers to a state in which the metallic insert member 10 is joined with the resin member 20 without having another member between them, for example, a state in which neither an adhesive nor a sealing agent is present between the metallic insert member 10 and the resin member 20. The polyacetal resin member 20, which includes a predetermined amount of the thermoplastic polyester elastomer (B) in the polyacetal resin (A), can have enhanced adhesiveness with the metallic insert member 10 to maintain high airtightness performance. Therefore, neither an adhesive nor a sealant needs to be present between the metallic insert member 10 and the resin member 20, eliminating cost of these materials and handling of an adhesive. Further, a step of applying an adhesive, a step of handling the metallic insert member 10 after application of an adhesive, a step of arranging a sealing member, and the like can be omitted to simplify the process. As described above, direct joining of the metallic insert member 10 with the resin member 20 can significantly and conventionally reduce manufacturing cost. In particular, a polyacetal resin is inexpensive in terms of raw-material cost, and thus useful for reducing manufacturing cost.

### [Airtightness]

As described above, the insert molded body 1 has very high airtightness performance with excellent adhesiveness between the metallic insert member 10 and the polyacetal resin member 20. Consequently, no air-bubble leakage is observed from the interface between the metallic insert member 10 and the resin member 20 when the insert molded body 1 is set on an airtightness testing machine, and the entire surface of the resin member 20 of the insert molded body 1 is immersed into distilled water, and a pressure of 500 kPa is applied to a back side of the insert molded body 1 for one minute.

### (Method of testing airtightness)

Specifically, evaluation may be performed with the airtightness testing device described below (see Fig. 2). The airtightness testing device 100 includes a testing device body 30, a lid body 40 for fixing the insert molded body 1 set at an opening of the testing device body 30, and an O ring 50 for sealing the insert molded body 1 set on the testing device body 30. Further, a line 60 for pressurizing the inside of the testing device body 30 is connected to the testing device body 30.

The insert molded body 1 is set at the opening of the testing device body 30 through the O ring 50 to seal the back side of the insert molded body 1. The lid body 40 is placed on the insert molded body 1 after sealing, and the insert molded body 1 is fixed such that the front side of the insert molded body 1 is exposed to the outside. Subsequently, distilled water 70 is poured over the front side of the insert molded body 1 to completely immerse the resin member 20 of the insert molded body 1 under distilled water. Then, the inside of the testing device body 20 is pressurized through the line 60 to apply a pressure of 500 kPa to the back side of the insert molded body 1 for one minute, and the presence or absence of air-bubble leakage from the interface between the metallic insert member 10 and the resin member 20 is visually checked. Airtightness is then evaluated by the presence or absence of air-bubble leakage.

### [Method of manufacturing insert molded body 1]

In a method of manufacturing the insert molded body 1, the aforementioned polyacetal resin composition is subjected to insert molding for integral formation with a metallic insert member. The above method is similar to those used for manufacturing a conventional version of the insert molded body 1 except that the aforementioned polyacetal resin composition is used as a raw material. Here, a general method of manufacturing the insert molded body 1 includes pre-arranging a metallic insert member in a molding mold, and filling the molding mold with a resin composition to obtain a composite molded body. In this case, the molding mold may include a heating member for locally heating the metallic insert member. Molding methods for filling a molding mold with a resin composition include injection molding, extrusion compression molding, and the like. Injection molding is commonly used. Injection molding is particularly suitable for a polyacetal resin composition because the polyacetal resin has excellent fluidity.

### [Uses]

The insert molded body 1 manufactured with a polyacetal resin composition as described above may be used for various uses, but suitable for uses in which particularly high airtightness performance is required.

For example, the insert molded body 1 is suitable as an insert molded article internally including an electrical/electric part which tends to be negatively affected by moisture or water. In particular, it is suitably used as a part for electrical/electric devices which are assumed to be used in a field of requiring a water proof function at high level, for example, at rivers, pools, ski areas, bath rooms are assumed, and uses, and which may result in failure when water or moisture enters therein. The insert molded body 1 is also useful, for example, as a sensor such as an inclination sensor and a fuel sensor. Inclination sensors include those used for in-vehicle uses such as attitude control, and those used for game controllers. Fuel sensors include those used for in-vehicle uses such as fuel quantity measurement. Further, the insert molded body 1 is also useful as a housing for an electrical/electric device internally including, for example, a resin boss, attachment member, and the like. Here, housings for electrical/electric devices include a housing for a portable imaging electronic device such as a cellular phone as well as a camera, a camcorder, and a digital camera; a housing for a portable information or communication terminal such as a notebook PC, a pocket computer, a desktop calculator, an electronic notebook, PDC, PHS, and a cellular phone; a housing for a portable sound electronic device such as MD, a cassette headphone stereo, a radio; a housing for a household appliance such as a liquid crystal TV/monitor, a telephone, a facsimile, and a hand scanner; and the like.

Further, the insert molded body 1, in which a polyacetal resin composition having excellent fuel resistance is used, is particularly suitable for a vehicle part which is brought into contact with a fuel oil. Such vehicle parts include, for example, an electrical connection connector for fuel pumps and the like, which is used for supplying electricity to a fuel pump.

### EXAMPLES

Below, the present invention will be described more specifically with reference to Examples, but the present invention shall not be limited in any way to the following Examples.

### [Examples 1 to 4, and Comparative Examples 1 to 2]

In Examples and Comparative Examples, the followings were used as a material of a polyacetal resin composition.

### [Component (A): polyacetal resin]

A polyacetal resin composition (melt index (as measured at a temperature of 190°C and a load of 2160 g): 9 g/10 minutes) including a polyacetal copolymer obtained by copolymerizing 96.7 mass% of trioxane and 3.3 mass% of 1,3-dioxolane; 0.5 mass% of a stabilizer (Irganox 1010 (BASF A.G.) relative to the polyacetal copolymer; and 0.1 mass% of melamine relative to the polyacetal copolymer.

### [Component (B): thermoplastic polyester elastomer]

B1: a polyether-polyester type elastomer (Product name: Grilax E-510N (Toyobo Co., Ltd.)
B-2: a polyester-polyester type elastomer (Product name: Pelprene S2001 (Toyobo Co., Ltd.)

The component (A) and the component (B) each in an amount according to the blending amounts shown in Table 1 were melt-kneaded with a twin-screw extruder at a cylinder temperature of 200°C to manufacture pellets of the resin compositions from Examples and Comparative Examples. It is noted that the blended amounts shown in the table are expressed in a unit of parts by mass.

The resulting polyacetal resin compositions were each used to manufacture the insert molded body 1 (an electrical connection connector for fuel pumps) as shown in Fig. 3, and the airtightness performance of the insert molded body 1 was evaluated in accordance with the method described below.

The insert molded body 1 as shown in Fig. 3 is a part which is to be fitted to a lid plate of a fuel tank for supplying electric power to a fuel pump inside the fuel tank. The insert molded body 1 includes the metallic insert member 10 serving as a metal terminal and the resin member 20. The metallic insert member 10 is formed to have a strip-like shape, and insert-molded so as to be exposed to the outside of a fuel tank at one end and exposed to the inside of the fuel tank at the other end, so as to penetrate the resin member 20. The metallic insert member 10 is a strip-shaped copper metal member (35 mm in length, 3.5 mm in width, and 1.3 mm in thickness) subjected to surface roughening treatment by the following chemical treatment (chemical etching).

### [Chemical etching]

A surface of the copper metal member was immersed into an etching solution A (an aqueous solution) having the following composition for one minute to remove an anticorrosive coating, and then immersed into an etching solution B (an aqueous solution) having the following composition for 5 minutes to etch the surface of the metal part. The 10-point averaged roughness Rz as measured according to JIS B 0601 was 10 µm.

### - Etching solution A (at a temperature of 20°C)

Hydrogen peroxide: 26 g/L
Sulfuric acid: 90 g/L

### - Etching solution B (at a temperature of 25°C)

Hydrogen peroxide: 80 g/L
Sulfuric acid: 90 g/L
Benzotriazol: 5 g/L
Sodium chloride: 0.2 g/L

The metallic insert members 10 were each arranged in a mold, and insert molding was performed each using the polyacetal resin compositions from Examples and Comparative Examples a manufacture of the respective insert molded body 1 in which the metallic insert member 10 is integrated with the resin member 20. The molding conditions are as follows.

### [Molding conditions]

Molding machine: Fanuc α-50c
Cylinder temperatures: 200°C-200°C-190°C-180°C
Mold temperature: 120°C
Injection rate: 17 mm/s
Holding pressure: 70 MPa for 20 seconds

The insert molded bodies 1 from Examples and Comparative Examples which were manufactured according to the aforementioned method were evaluated for airtightness and a flexural modulus in accordance with the following methods.

### [Evaluation of airtightness]

As shown in Fig. 2, the insert molded body 1 was set at the opening of the testing device body 30 through the O ring 50 in the airtightness testing machine 100, and the back side of the insert molded body 1 was sealed. The lid body 40 was placed on the insert molded body 1 after sealing, and the insert molded body 1 was fixed with the front side of the insert molded body 1 exposed to the outside. Then, the distilled water 70 was poured over the front side of the insert molded body 1 to completely immerse the resin member 20 of the insert molded body 1 under distilled water. Then, the inside of the testing device body 20 was pressurized through the line 60 to apply a pressure of 500 kPa to the back side of the insert molded body 1 for one minute, and the presence or absence of air-bubble leakage from the interface between the metallic insert member 10 and the resin member 20 was visually checked. Airtightness was then evaluated by the presence or absence of air-bubble leakage. Results from the airtightness evaluation performed according to the following evaluation criteria are shown in Table 1.
o: air-bubble leakage was not observed.
×: air-bubble leakage was observed.

### [Evaluation of flexural modulus]

A flexural modulus was measured in accordance with ISO178. A flexural modulus of 700 MPa or more is evaluated as sufficient stiffness.

**[Table 1]**

| | Example | | | | Comparative Example | |
|---|---|---|---|---|---|---|
| | 1 | 2 | 3 | 4 | 1 | 2 |
| 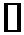 A) Polyacetal resin | 100 | 100 | 100 | 100 | 100 | 100 |
| 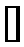 B1) Polyester elastomer | 100 | 50 | 35 | - | 25 | 200 |
| 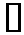 B2) Polyester elastomer | — | — | — | 100 | — | — |
| Airtightness | ○ | ○ | ○ | ○ | × | ○ |
| Flexural modulus[Mpa] | 800 | 1400 | 1600 | 800 | 1700 | 300 |

According to Table 1, the insert molded bodies formed with the polyacetal resin compositions from Examples 1 to 4 have high airtightness and excellent stiffness. In contrast, airtightness is insufficient when the content of a polyester elastomer is too small as in Comparative Example 1, and the flexural modulus is insufficient when the content of a polyester elastomer is too large as in Comparative Example 2.

### EXPLANATION OF REFERENCE NUMERALS

1 Insert molded body (Electric connection connector for fuel pumps)
10 Metallic insert member (metal terminal)
20 Resin member
100 Airtightness testing machine

## Claims

1. An insert molded body (1), comprising a metallic insert member (10) and a polyacetal resin member (20),
the metallic insert member (10) being directly joined with the polyacetal resin member (20),
the polyacetal resin member (20) being a molded body of a polyacetal resin composition including 100 parts by mass of a polyacetal resin (A),
**characterized in that** polyacetal resin composition further includes 30 parts by mass or more and 150 parts by mass or less of a thermoplastic polyester elastomer (B).

2. The insert molded body (1) according to claim 1, wherein the metallic insert member (10) is a copper member.

3. The insert molded body (1) according to claims 1 or 2, wherein a 10-point averaged roughness Rz as measured in accordance with JIS B 0601 is 10 µm or more at a surface of the metal insert member (10), the surface being in contact with the resin member.

4. An electrical connection connector for fuel pumps, comprising the insert molded body (1) according to any one of claims 1 to 3.

## Patentansprüche

1. Ein Einsatzformkörper (1), der ein metallisches Einsatzteil (10) und ein Polyacetalharzteil (20) umfasst,
wobei das metallische Einsatzteil (10) direkt mit dem Polyacetalharzteil (20) verbunden ist,
wobei das Polyacetalharzteil (20) ein geformter Körper aus einer Polyacetalharz-Zusammensetzung ist, die 100 Masseteile eines Polyacetalharzes (A) enthält,
**dadurch gekennzeichnet, dass** die Polyacetalharz-Zusammensetzung ferner 30 Masseteile oder mehr und 150 Masseteile oder weniger eines thermoplastischen Polyesterelastomers (B) enthält.

2. Der Einsatzformkörper (1) gemäß Anspruch 1, wobei das metallische Einsatzteil (10) ein Kupferteil ist.

3. Der Einsatzformkörper (1) gemäß Anspruch 1 oder 2, bei dem der nach JIS B 0601 gemessene 10-Punkte-Mittelwert der Rauigkeit Rz an einer Oberfläche des metallischen Einsatzteils (10) 10 µm oder mehr beträgt, wobei die Oberfläche mit dem Harzteil in Kontakt steht

4. Ein elektrischer Verbindungsstecker für Kraftstoffpumpen, umfassend den Einsatzformkörper (1) nach einem der Ansprüche 1 bis 3.

## Revendications

1. Corps moulé par insertion (1), comprenant un élément d'insertion métallique (10) et un élément en résine de polyacétal (20),
l'élément d'insertion métallique (10) étant directement joint à l'élément en résine de polyacétal (20),
l'élément en résine de polyacétal (20) étant un corps moulé d'une composition de résine de polyacétal contenant 100 parties en masse d'une résine de polyacétal (A),
**caractérisé en ce que** la composition de résine de polyacétal contient en outre 30 parties en masse ou plus et 150 parties en masse ou moins d'un élastomère de polyester thermoplastique (B).

2. Corps moulé par insertion (1) selon la revendication 1, dans lequel l'élément d'insertion métallique (10) est un élément en cuivre.

3. Corps moulé par insertion (1) selon la revendication 1 ou 2, dans lequel la rugosité moyenne en 10 points Rz, telle que mesurée conformément à la norme JIS B 0601, est de 10 µm ou plus à la surface de l'élément d'insertion métallique (10), la surface étant en contact avec l'élément en résine.

4. Connecteur de raccordement électrique pour pompes à carburant, comprenant le corps moulé par insertion (1) selon l'une quelconque des revendications 1 à 3.
